# EUROPÄISCHE PATENTSCHRIFT

(11) **EP 2 431 769 B1**
(45) Veröffentlichungstag und Bekanntmachung des Hinweises auf die Patenterteilung: **19.10.2016**
(21) Anmeldenummer: 11007419.2
(22) Anmeldetag: 13.09.2011
(51) Int. Cl.: G01W 1/02

(54) **Wetterstation zur Messung von Windstärke oder / und Beleuchtungsstärke**
Weather station for measuring wind strength and /or lighting levels
Station météo pour la mesure de la force cinétique et/ou de la force d'éclairage

(30) Priorität: 21.09.2010 DE 102010046105
(43) Veröffentlichungstag der Anmeldung: 21.03.2012
(73) Patentinhaber: Matthiessen, Hans, 23611 Bad Schwartau (DE)
(72) Erfinder: Matthiessen, Hans, 23611 Bad Schwartau (DE)
(74) Vertreter: Vonnemann, Gerhard

(56) Entgegenhaltungen:
- WO-A1-01/35351
- US-B1- 7 385 304

## Beschreibung

Gegenstand der Erfindung ist eine Wetterstation für die Benutzung in privaten Haushalten umweltbewusster Menschen, die erst oberhalb einer bestimmten Wind- oder/und Beleuchtungsstärke, gemessen außerhalb des Hauses, elektrische Energie an geeignete elektrische Verbraucher durchschaltet.

Umweltbewusste Menschen versuchen Wege zu finden, möglichst ausschließlich elektrische Energie aus erneuerbaren oder nachhaltigen Energiequellen zu verbrauchen. Der eingeschlagene Weg dafür ist derzeit, dass man zu einem Energieversorgungsträger wechselt, der verspricht ausschließlich oder überwiegend erneuerbare Energiequellen zu verwenden. Nachteilig ist dabei, dass dieser Strom einige Cent pro kWh teurer ist und dass es aber offensichtlich der gleiche Strom ist, den auch der Nachbar bezieht, der aber einen Vertrag mit einem Billiganbieter hat.

Aufgabe der Erfindung ist es, eine technische Einrichtung zu finden, die unabhängig vom gewählten Anbieter gewährleistet, einen hohen Anteil erneuerbare Energien z.B. von Windenergieanlagen zu verbrauchen, sicher zu sein, nicht den gleichen Strommix wie der Nachbar zu haben, sondern tatsächlich vorzugsweise dann Strom vom örtlichen Versorger abzunehmen, wenn sehr viel Energie aus erneuerbaren Energiequellen zu Verfügung steht.

Stand der Technik zur Lösung dieser Schwierigkeit sind seit mehr als einem halben Jahrhundert bekannte sogenannte Rundsteueranlagen mit denen der Versorger beim Abnehmer Verbraucher zu- bzw. abschalten kann, z.B. CH000000359193A. Damit ist ein Versorger mit erneuerbaren Energiequellen auch in der Lage nur dann die Waschmaschine oder das Ladegerät für die Batterie des Elektroautos zuzuschalten, wenn z.B. ausreichend Energie aus Windanlagen zur Verfügung steht. Diese Anlagen sind wenig flexibel, da sie nur erlauben für ganze Gruppen von Abnehmern, Verbraucher zuzuschalten und sind für den Verbraucher mit laufenden Gebühren verbunden.

US 7,385,304 B1 offenbart ein Warnungssystem, in dem ein Warnungsmodul bei starkem Wind aktiviert wird. Aus WO 01135351 A1 ist es bekannt, einen Verbraucher nur mit elektrischer Energie zu versorgen, als Windenergie erzeugt wird.

Flexibler für diese Aufgabe ist das sogenannte "Smart Grid", in dem über digitale Verbindungen z.B. Cellphone-verbindungen die Aufgabe der Rundsteueranlage sehr an die Aufgabe angepasst individuell gestaltet werden kann. Es gibt dafür viele Pläne und diskutierte Strategien und einige Pilotprojekte, aber es wird erhebliche Investitionen erfordern und noch Jahre dauern, bis diese Technik flächendeckend eingeführt ist [1] Zudem ist es grade für umweltbewusste Menschen ein wesentlicher Vorteil, wenn sie selbst bestimmen können, welche Art von Strom sie aus dem Netz entnehmen und nicht gezwungen sind, Atomstrom zu verbrauchen, weil die EVU es grade wirtschaftlicher findet ihre Grundlastkapazitäten auszulasten.

Sehr viel mehr an den Willen des Kunden angepasst, preiswerten und schneller realisierbar wird diese Aufgabe erfindungsgemäß mit einer Einrichtung gemäß Anspruch 1 gelöst, die erst oberhalb einer bestimmten örtlichen Wind- oder/und Beleuchtungsstärke einen Verbraucher-Anschluss oder Steckdose an die Stromversorgung des Hauses durchschaltet. Es ist in Ländern mit mehr als 20 % Anteil von Windenergie am Energiemix davon auszugehen, dass ab 4 Windstärken die Anlagen Nennleistung abgeben und mehr Windenergie zur Verfügung steht, als gebraucht wird, so dass elektrische Energie exportiert wird, dahin, wo es weniger weht oder wo der Anteil von Windenergie am Energiemix geringer ist. Wetterereignisse, wie der Wind sind relativ großflächige Vorgänge, so dass davon auszugehen ist, wenn es bei mir ums Haus weht, ist der Anteil Windstrom aus der Steckdose hoch. Auch führt bei dieser Technik die immerhin gegebene räumliche Nähe von Erzeuger und Verbraucher dazu, dass die bezogene elektrische Energie keine allzu großen Transportwege und die damit verbunden Verluste oder übermäßige Belastung des Netzes zu verzeichnen hat.

Anschließbar daran sind alle elektrischen Verbraucher, bei denen es nicht so sehr darauf ankommt, zu welcher Tageszeit sie benutzt werden, wie z.B. Ladegeräte für Elektroautos, Wärmepumpen zum Befüllen des Hybridspeichers, Waschautomaten oder Geschirrspüler. Zudem hat die Einrichtung in einer besseren Ausführung zusätzlich eine Vorrichtung, eine Ausschaltverzögerung, die bei Bedarf z. B. bei Waschmaschinen sicherstellt, dass ein Waschvorgang auch zu ende geführt wird und nicht mitten im Programm stehenbleibt, nur weil der Wind zufällig kurzzeitig unter die ausgewählte Schwelle gefallen ist. Eine weitere enthaltene Vorrichtung, eine Einschaltverzögerung von etwa 30 min stellt bei Bedarf sicher, dass kurze Böen während eines an sich sonst windstillen Tages nicht zum Starten des Waschvorganges führt. Da es vorkommen kann, dass es mehrere Tage nicht stärker geweht hat, ist ein Knopf oder Schalter vorgesehen, mit dem der Verbraucher zur Not bei niedrigen Windstärken Spannung zuschalten kann. Die Art der Schaltmethode ist von der Art des Verbrauchers und seiner Anforderungen abhängig. Für eine Anlage mit Beleuchtungssensor gilt vergleichbares, wobei bei bestimmten Wetterlagen weniger von großräumigen Effekten bezüglich der Beleuchtungsstärke ausgegangen werden kann.

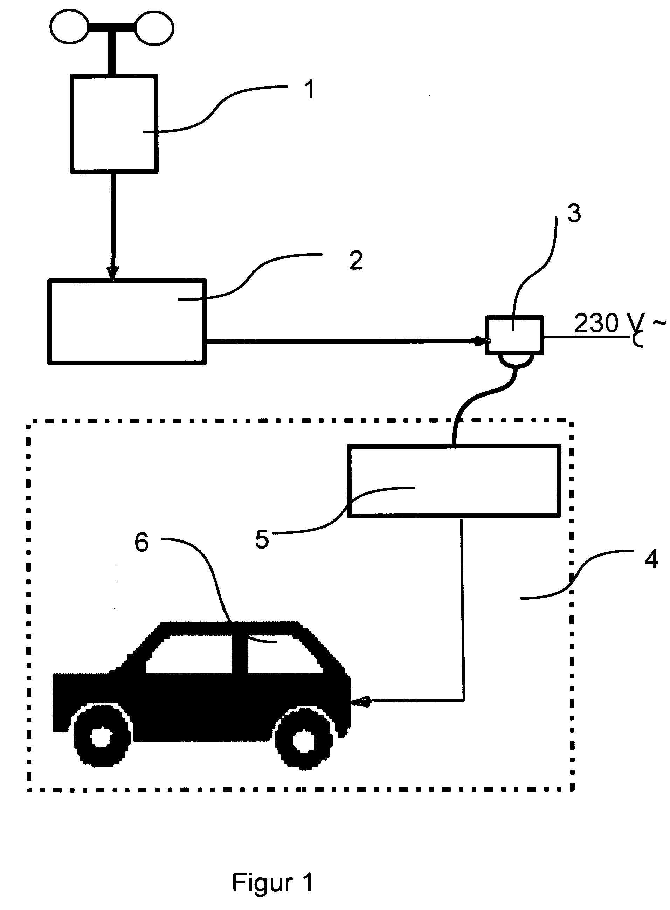

Die Zeichnungen zeigen, wie diese Aufgabe in einfachster Ausführung für das Ladegerät 5 eines Elektroautos 6 von einer Einrichtung gemäß Figur1 gelöst wird. Ein Windstärkesensor 1 auf dem Dach des Anwesens überträgt die Information über die grade herrschende Windstärke auf eine Schaltelektronik 2 , die beim Überschreiten einer eingestellten Schwelle über eine Schaltsteckdose 3 den angeschlossenen Verbraucher 4 mit Strom aus dem Stromnetz versorgt. Eine spezielle Ein- und Aus-Schaltverzögerung ist für Ladegerät 5 eines Elektroautos 6 nicht zwingend erforderlich, ein Knopf mit dem auch bei Windstille die sofortige, vollständige Ladung durchgeführt werden kann ist aus schon genannten Gründen nützlich.

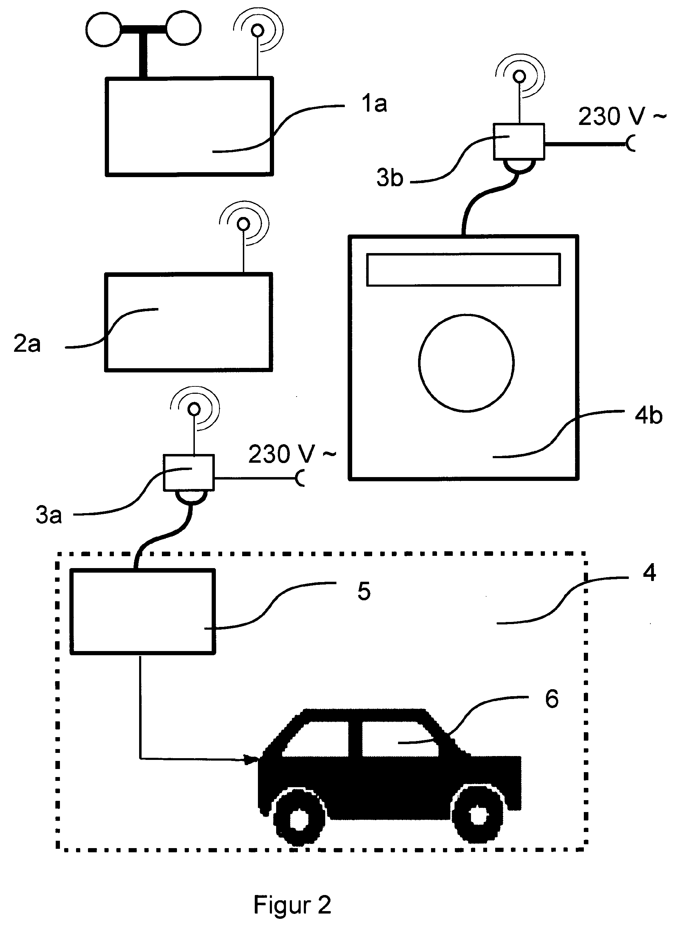

Die Übertragung vom Dach kann über ein Kabel oder wie in Figur 2 über eine codierte Funkverbindung in der in privaten Haushalten üblichen 433 MHz-Technik (433,05 Mhz bis 434,79 MHz für Europa, Afrika, Nachfolgestaaten der UdSSR und Mongolei oder 902 MHz bis 928 MHz für Nord- und Südamerika) erfolgen. Das hätte den Vorteil, dass für diese Aufgabe handelsüblich verfügbare Komponenten z.T. einsetzbar sind, wie z.B. den Windstärkesensor 1a aus einer Hauswetterstation und eine Funkschaltsteckdose 3a (z.B. bestellbar bei Conrad Elektronik [2]). Die Schaltelektronik ist wahlweise entweder für den einfachen Fall (ohne Einschalt- oder Ausschaltverzögerung und ohne Einstellbarkeit der Schaltschwelle) im Sensorgehäuse 1a, sonst in einem separaten Gehäuse 2a oder in der Schaltsteckdose 3a,b unterzubringen.

Die Unterbringung der Schaltelektronik in einem separaten Gehäuse 2a hat den Vorteil, dass in der 433 MHz-Technik leicht weitere Funk-Schaltsteckdosen in das System eingeführt werden können, so dass weitere Verbraucher 4b an unterschiedlichen Standorten im Hause angeschlossen werden können. Bei digitaler Signalverarbeitung mit einem µ-Prozessor ist auch die spezifische Programmierung für jeden Schaltkanal leicht möglich.

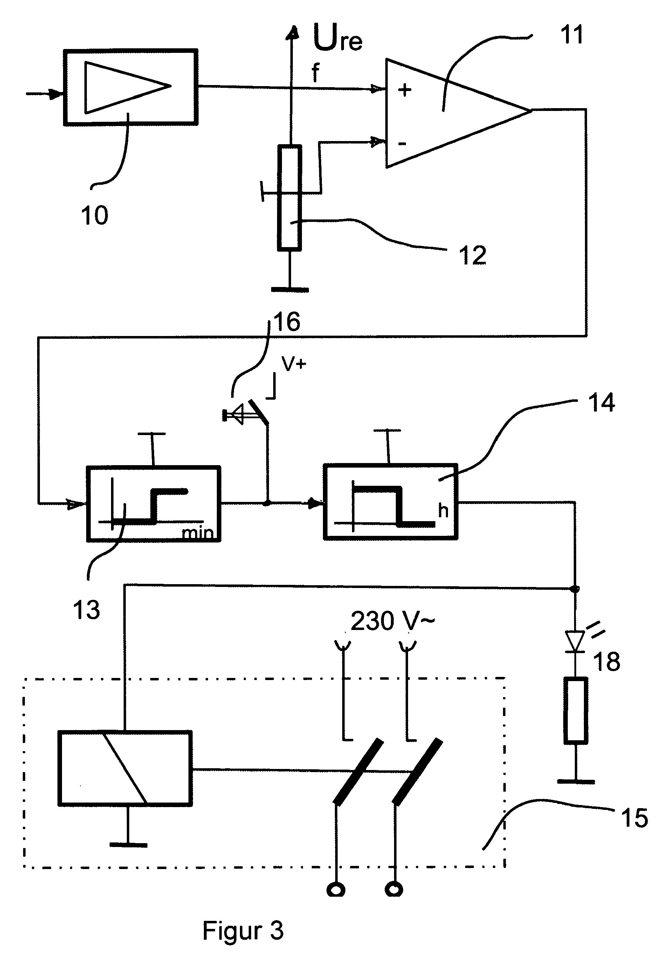

Das Blockschaltbild nach Figur 3 zeigt die einzelnen Elemente der Schaltelektronik bei analoger Signalverarbeitung für den Fall von Windstärkesensoren und des Anschlusses einer Haushaltsmaschine (Waschmaschine, Geschirrspüler, Wäschetrockner, etc.). Das am Eingang des Verstärkers 10 anliegende Ausgangssignal des Windstärke-Sensors, wird auf eine passende Größe verstärkt, um im Komparator 11 mit der mit dem Potentiometer 12 eingestellten Vergleichsspannung verglichen zu werden. Bei passender Einstellung schaltet der Ausgang des Komparators 11 bei mehr als 3 Beaufort auf logisch 1 (V+). Dieses logische Signal wird von der Einschaltverzögerung 13 erst durchgeschaltet, wenn der Ausgang des Komparators 11 für mindestens etwa 30 min ununterbrochen auf logisch 1 (V+) steht. Danach geht auch der Ausgang der Einschaltverzögerung 13 auf logisch 1 (V+) und startet die Ausschaltverzögerung 14, die dann die Durchschalteinheit 15 betätigt und die Netzspannung auf den Verbraucher-Anschluss mit einem Nachlauf von etwa 3 Stunden durchschaltet.

Für die Realisierung der Einschaltverzögerung gibt es verschiedene Möglichkeiten; entweder wie in diesem Beispiel beschrieben, durch ein einfaches Zeitglied, das nur logische Signale durchschaltet, die länger als die Verzögerungszeit sind oder durch ein Glied zur Bildung eines zeitlichen z,B. 30 min-Mittelwertes, das in diesem Beispiel aber zwischen Verstärker 10 und Komparator 11 geschaltet würde.

Ein Taster 16 erlaubt dem Benutzer den Nachlauf der Ausschaltverzögerung 14 zu starten, um an windstillen Tagen auch waschen zu können. Auch eine optische Anzeige, ob die Schaltschwelle überschritten ist, also umweltfreundlichere Energie zur Verfügung steht, ist vorteilhaft und ist in dem Beispiel mit einer LED realisiert.

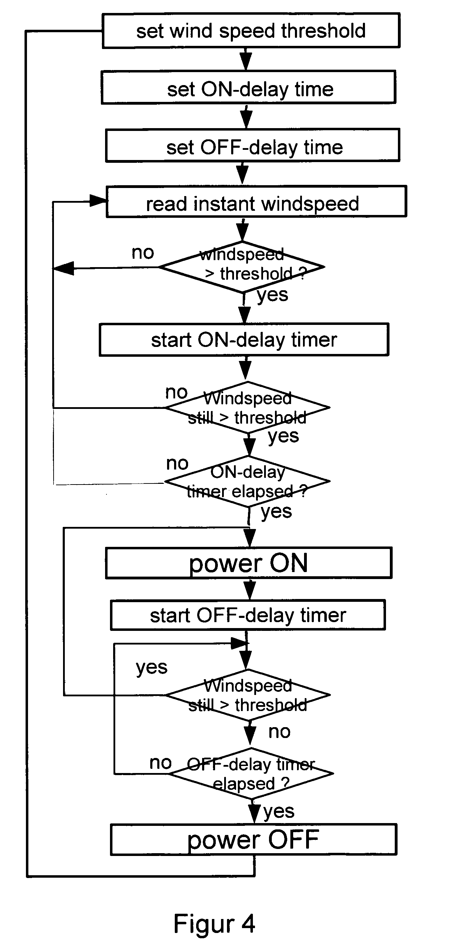

Das Flow-Diagramm nach Figur 4 zeigt den Ablaufprozess bei Realisierung der Signalverarbeitungs-Aufgabe mit einem µ-Prozessor.

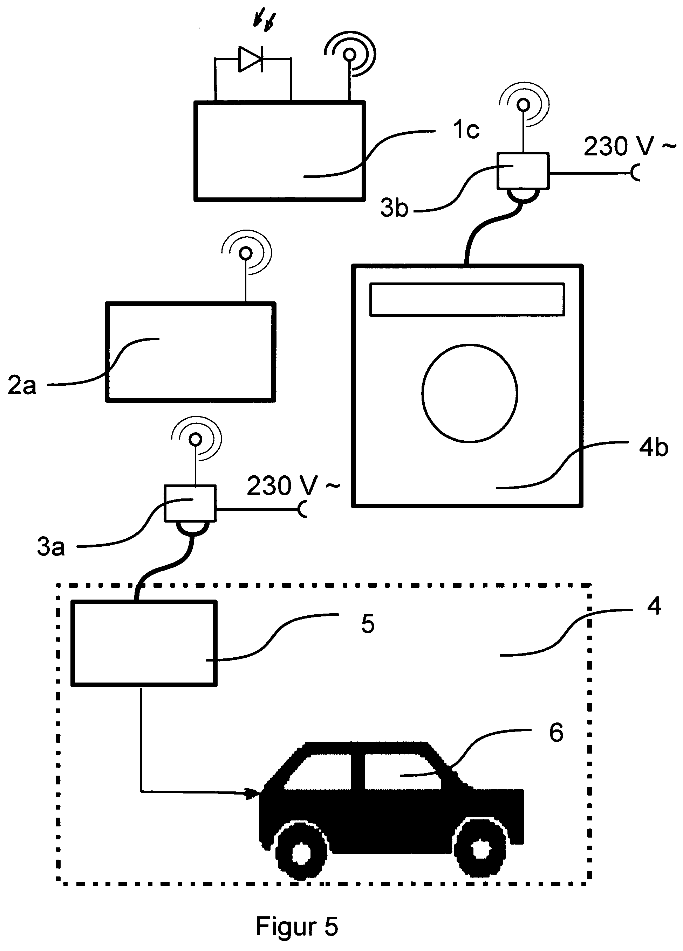

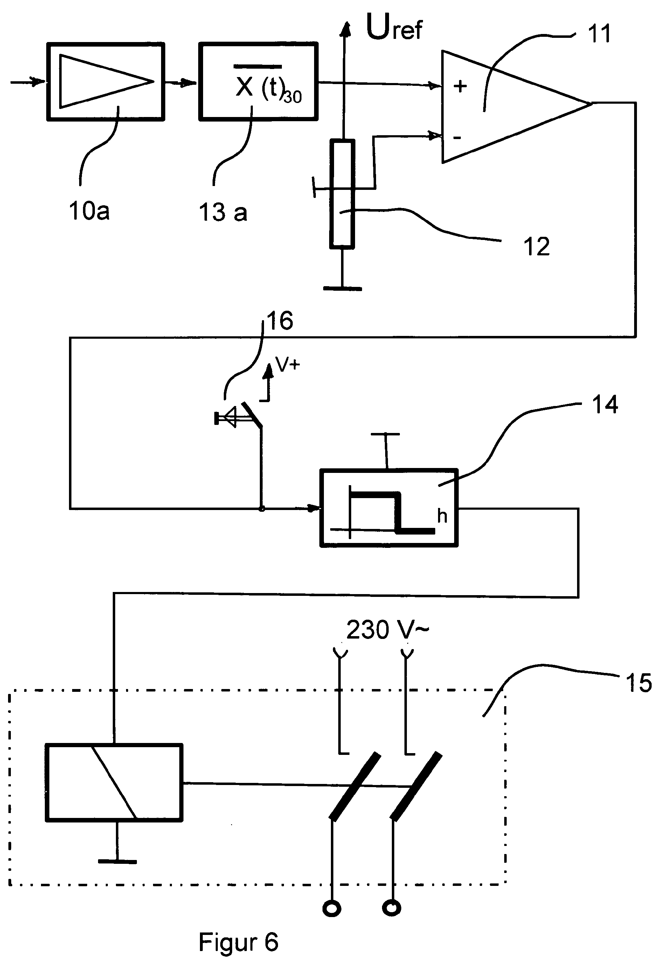

Bei Benutzung des Beleuchtungsstärke-Sensors 1c wie in Figur 5 ist es vorteilhaft die andere Einschaltverzögerung vorzusehen. Als Eingangsgröße für das Anschalten des Verbrauchers wird das Überschreiten des gleitenden zeitlicher Mittelwert der Beleuchtungsstärke vorgesehen (Blockschaltbild Figur 6). Ein 30-min-Mittelwert ist gemessen an den möglichen zeitlichen Fluktuationen durch vorbeiziehende Wolken ein vernünftiger Wert. Er ist gleichzeitig, weil ja die Wolken sich mit dem Wind bewegen, ein Maß für die räumliche Verteilung der Wolken und damit der mittleren Beleuchtungsstärke in der Region. Die Abschaltverzögerung ist wie beim Windstärkesensor vorzusehen, damit ein eingeleiteter Waschvorgang an einer Waschmaschine sicher zu ende geführt werden kann. Die normierte Signalstärke ist dann so eingestellt, dass bei einem Mittelwert von 50 % Sonnenschein die Schaltschwelle überschritten wird.

Als Beleuchtungsstärkesensor ist eine einfache Photodiode verwendbar Eine Verbesserung des Beleuchtungsstärkesensors besteht darin, dass diese Diode in einem Kasten hinter einem unter einem Winkel von 45 grd (Wert für Deutschland) in Südrichtung schräg aufgestellten Glasfenster angeordnet wird. Damit wird erreicht, dass der Beleuchtungsstärkesensor sich in einer annähernd gleichen optischen Anordnung befindet, wie die meisten Sonnenkollektoren und damit das Ausgangssignal ein gutes Maß für die Größe der Energieerzeugung von Sonnenkollektoren darstellt. Eine weitere Verbesserung ist die Verwendung eines kleinen Photovoltaik-Elementes, das wie die großen Elemente mit 45grd Neigung gegen Süden angeordnet wird.

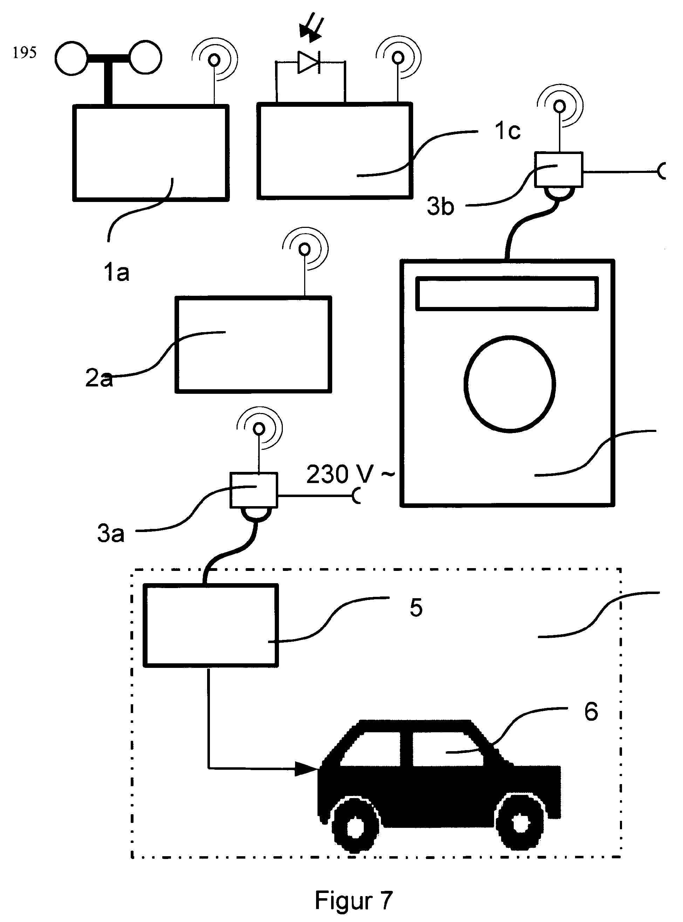

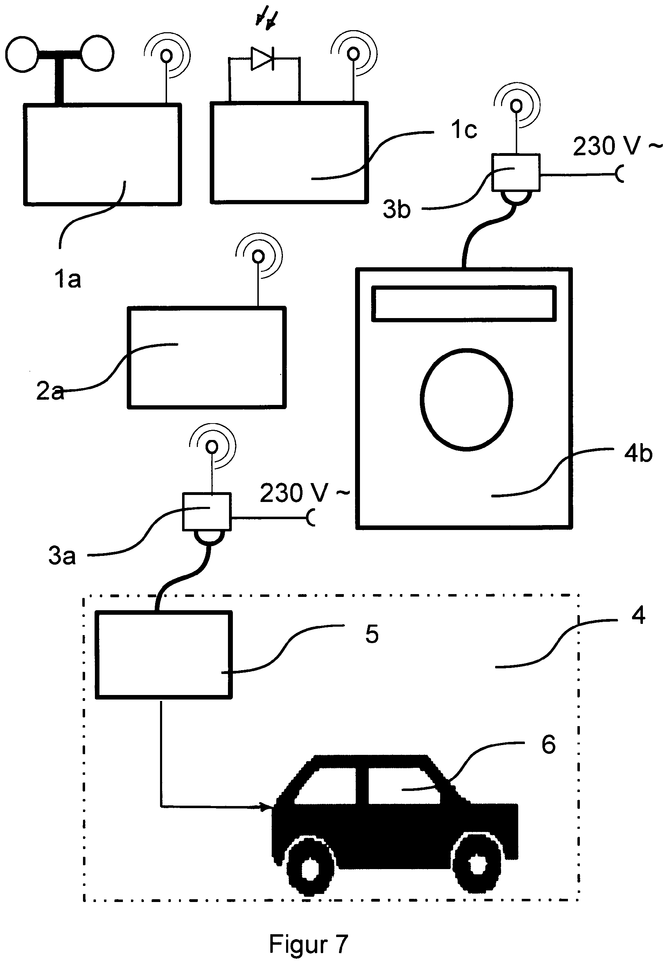

Bei Benutzung beider Sensoren 1a und 1c, sowohl für die Windstärke als auch für die Beleuchtungsstärke (Figur 7) ist der Entscheidungsprozess für das Einschalten des Verbrauchers vorteilhaft mit Gewichtsfaktoren zu versehen. Liegt in einer Region der mittlere Beitrag der Windenergie zur gesamten elektrischen Energieerzeugung im Netz der Energie-Erzeuger bei ca. 20 %, dann ist, wie bereits erwähnt, davon auszugehen, dass ab etwa 4 Windstärken Nennleistung abgegeben wird und nahezu 100 % der verbrauchten elektrischen Energie von Windkraftwerken erzeugt wird. Legen wir also den Gewichtsfaktor auf f w = 1 und die Größe der normierten Signalgröße der Windstärke so fest, das bei 3 Beaufort ohne Einfluss der Photovoltaik die Schaltschwelle überschritten wird. So wird erreicht, dass bei erreichen der Nennleistung der Verbraucher schon vorher zugeschaltet wurde.

Ist der Beitrag der Photovoltaik an der gesamten elektrischen Energieerzeugung in der betrachteten Region bei 5 %, so ist das ein Viertel des Beitrages der Windenergie- anlagen. Es wird daher bei Vernachlässigung aller Unterschiede gegenüber der Windenergie auch zur Vereinfachung der Einstellbarkeit durch den Benutzer vorgeschlagen den Gewichtsfaktor auf diesen Wert also f P = 1/4 einzustellen und legen damit die Größe der normierten Signalstärke so fest, dass bei einem Mittelwert von 50 % Sonnenschein ein Viertel der Schaltschwelle erreicht wird.

Bei Werten des Anteils am Energie-Mix, die deutlich kleiner sind , z.B. 5% bei der Windenergie, müsste die Schaltschwelle auf einen Wert größer 6 Beaufort eingestellt werden, wenn man fast ausschließlich Windenergie verbrauchen möchte, was aber wenig vorteilhaft ist, da diese Windstärken weniger häufig vorkommen. Da bei der vorgeschlagenen Einrichtung im wesentlichen die Verbesserung des Energiemix im eigenen Stromverbrauch zu mehr erneuerbarer Energie erreicht werden soll, wird vorgeschlagen, die Schaltschwelle grundsätzlich bei 3 Beaufort zu belassen, da von diesen Windstärken an Windenergieanlagen Leistung im Bereich der Nennleistung abgeben und damit einen wesentlichen Beitrag zu Gesamtleistung im Netz liefern.

Ist der regionale Anteil der Photovoltaik am Energiemix größer als der der Windenergie so wird vorteilhaft die normierte Signalstärke bei einem Mittelwert von 50 % Sonnenschein auf fP = 1 (Erreichen der Schaltschwelle) gesetzt und den Wert für die Windenergie auf eine Größe, die dem Bruchteil am Energiemix in Relation zur Photovoltaik entspricht.

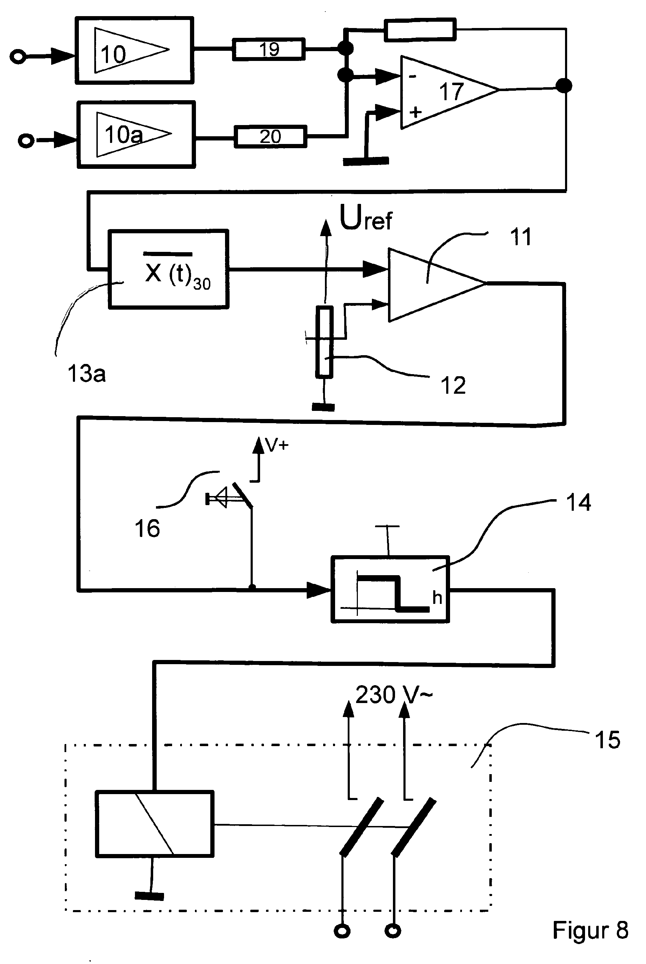

Figur 8 zeigt das Blockschaltbild bei analoger Signalverarbeitung. Von den Ausgängen der Verstärker 10 und 10a über die Widerstände 19 und 20 gelangt das Signal für die Windstärke bzw. Beleuchtungsstärke zum Addierer 17, dessen Ausgangssignal über das 30 min-Mittelwertglied 13a zum Komparator gelangt. Die weitere Signal-Verarbeitung erfolgt wie in Figur 3. Die Widerstände 19 und 20 der Additionsschaltung sind derart gewählt, dass die Addition der Signale mit dem Gewichtsverhältnis im Energie-Mix der jeweiligen Region erfolgt. Signalverstärkung und Komparatorschwelle sind so eingestellt, dass der Schaltpunkt für den im Verhältnis größeren Wert entweder beim Überschreiten von 3 Windstärken, bzw. bei 50 % Sonnenschein erreicht wird. Der kleinere Wert im Energie-Mix wird dann nur mit dem entsprechend kleineren Gewicht addiert.

Es versteht sich von selbst, dass diese Aufgabe vorteilhaft digital mit einem µ-Prozessor erledigt werden kann. Dabei gibt der Nutzer lediglich die Anteile am Gesamtenergiemix ein. Die beschriebene Signalverarbeitung wird durch das Programm erledigt. Zusätzliche Rechenaufgaben durch den Nutzer entfallen. Für die Bedienung durch den Nutzer ist gemäß Stand der Technik eine digitale Anzeige, die im Betrieb den Schaltzustand und die noch verbleibende Nachlaufzeit anzeigt und zur Eingabe der Schalt-Parameter die mit Hilfe einer Menü-Taste und zweier Tasten mit Aufwärts- Abwärts-Funktion den Durchlauf durch das Menü und die eingegebenen Werte anzeigt.

### Bezugszeichenliste

- 1: Windstärkesensor
- 2: Schaltelktronik
- 3: Schaltsteckdose
- 4: Verbraucher
- 5: Ladegerät
- 6: Elektroauto

- 1a: Windstärkesensor mit 433 Mhz-Funktechnik
- 2a: Schaltelktronik mit 433 Mhz-Funktechnik
- 3a, b: Schaltsteckdosen mit 433 Mhz-Funktechnik
- 4 b: weiterer Verbraucher

- 10: Verstärker für Windstärke-signal
- 11: Komparator
- 12: Potentiometer
- 13: Einschaltverzögerung
- 14: Ausschaltverzögerung
- 15: Durchschalteinheit
- 16: Taster
- 18: optische Anzeige

- 1c: Beleuchtungsstärkesensor mit 433 Mhz-Funktechnik
- 10a: Verstärker für Beleuchtungsstärke-Signal
- 13a: 30-min-Mittelwertglied
- 17: Addierer
- 19,20: Widerstände zur Gewichtung der Sensorsignale

## Patentansprüche

1. Wetterstation zur Messung von Windstärke und/oder Beleuchtungsstärke, **dadurch gekennzeichnet, dass** die Wetterstation eine elektrische Schalteinrichtung (2) umfasst, die dazu ausgelegt ist, bei Überschreiten eines Schaltschwellwerts bei einer bestimmten Messwertgröße elektrische Verbraucher (4) mit dem Energieversorgungsnetz zu verbinden, wobei die Schalteinrichtung einen Knopf oder Schalter aufweist, mit dem die Verbraucher auch bei unterschrittenem Schaltschwellwert mit dem Energieversorgungsnetz verbindbar sind.

2. Wetterstation gemäß Anspruch 1, **dadurch gekennzeichnet, dass** der Schaltschwellwert für Windstärke bei ca.3 Beaufort liegt.

3. Wetterstation gemäß Anspruch 1,. **dadurch gekennzeichnet, dass** der Schaltschwellwert für Beleuchtungsstärke bei ungefähr einem 30-min-Mittelwert von 50 % Sonnenschein liegt.

4. Wetterstation gemäß Anspruch 1 und 2, **dadurch gekennzeichnet, dass** die Schalteinrichtung eine Einschaltverzögerung enthält, die die Verbraucher (4) erst mit Strom versorgt, wenn die Windstärke für eine bestimmte Dauer ohne Unterbrechung oberhalb des Schaltschwellwerts war.

5. Wetterstation gemäß einem der Ansprüche 1 bis 4, **dadurch gekennzeichnet, dass** die Schalteinrichtung eine Ausschaltverzögerung (14) enthält, die die Verbraucher (4) erst vom Netz trennt, wenn die Windstärke für eine bestimmte Dauer ohne Unterbrechung unterhalb des Schaltschwellwerts war.

6. Wetterstation gemäß Anspruch 5, **dadurch gekennzeichnet, dass** der Knopf oder Schalter ein von Hand bedienbarer Taster (16) ist, wobei sich die Stromversorgung erst nach Ablauf der Nachlaufzeit der Ausschaltverzögerung (14) wieder ausschaltet.

7. Wetterstation gemäß Anspruch 1 bis 6, **dadurch gekennzeichnet, dass** Messwerte für Windstärke und Beleuchtungsstärke gleichzeitig messbar sind und die Messwerte mit unterschiedlichen Gewichtsfaktoren versehen als zeitlicher Mittelwert der Summe mit dem Schaltschwellwert vergleichbar sind.

8. Wetterstation gemäß Anspruch 7, **dadurch gekennzeichnet, dass** die Gewichtsfaktoren von Windstärke und Beleuchtungsstärke im gleichen Größenverhältnis zueinander stehen, wie die zugehörigen Prozentsätze von Windenergie und Photovoltaik im elektrischen Energiemix der Region.

9. Wetterstation gemäß Anspruch 1 bis 8, **dadurch gekennzeichnet, dass** die Schaltelektronik in einem zentralen Gehäuse mit Anzeige und Bedienelementen eingebaut ist und die Sensoren für Windstärke und/oder Beleuchtungsstärke als auch die Durchschalteinheiten (15) von Schaltsteckdosen (3a, 3b) über drahtlose Funkstrecken mit der Schaltelektronik (2a) verbunden sind.

## Claims

1. Weather station for measuring wind speed and/or illuminance intensity, **characterized in that** the weather station comprises an electrical switching device (2) laid out to connect electrical consumers (4) to the power supply mains when a switching threshold value has been exceeded at a certain measurement value, wherein the switching device comprises a button or switch with which the consumers are connectable to the power supply mains even when the switching threshold value is fallen below.

2. Weather station as in claim 1, **characterized in that** the switching threshold value for the wind speed is approximately 3 Beaufort.

3. Weather station as in claim 1, **characterized in that** the switching threshold value for the illuminance intensity is approximately a 30 minute mean value of 50 percent sunshine.

4. Weather station as in claim 1 and 2, **characterized in that** the switching device includes a switch-on delay that supplies the consumers (4) with power only if the wind speed has been above the switching threshold value for a certain length of time without interruption.

5. Weather station as in one of claims 1 to 4, **characterized in that** the switching device include a switch-off delay (14) that disconnects the consumers (4) from the mains only if the wind speed has been below the switching threshold for a certain length of time without interruption.

6. Weather station as in claim 5, **characterized in that** the button or switch is a manually operatable pushbutton (16), wherein the power supply only switches off again after the overtravel of the switch-off delay (14) has passed.

7. Weather station as in claim 1 to 6, **characterized in that** measurement values for wind speed and illuminance intensity can be measured simultaneously and the measurement values, after weighting with different weighting factors, can be compared as the time mean value of the sum with the switching threshold value.

8. Weather station as in claim 7, **characterized in that** the weighting factors of wind speed and illuminance intensity are at the same magnitude ratio as the associated percentages of wind speed and photovoltaics in the electrical energy mix of the region.

9. Weather station as in claim 1 to 8, **characterized in that** the electronic switching system is installed in a central housing with display and operating elements and the sensors for wind speed and illuminance intensity as well as also the through-connection units (15) of switch sockets (3a, 3b) are connected to the electronic switching system (2) across wireless transmission paths.

## Revendications

1. Station météo pour la mesure de la force du vent et/ou de la luminosité, **caractérisée en ce que** la station météo comprend un dispositif de commutation électrique (2), qui est conçu afin de relier, en cas de dépassement d'une valeur de seuil de commutation en présence d'une grandeur de valeur de mesure déterminée, des appareils consommateurs électriques (4) avec le réseau d'alimentation électrique, dans laquelle le dispositif de commutation présente un bouton ou un interrupteur, avec lequel les appareils consommateurs peuvent être reliés avec le réseau d'alimentation électrique même en cas de non dépassement de la valeur de seuil de commutation.

2. Station météo selon la revendication 1, **caractérisée en ce que** la valeur de seuil de commutation pour la force du vent se situe à environ 3 Beaufort.

3. Station météo selon la revendication 1, **caractérisée en ce que** la valeur de seuil de commutation pour la luminosité se situe à environ une valeur moyenne de 30 min de 50% d'ensoleillement.

4. Station météo selon la revendication 1 ou 2, **caractérisée en ce que** le dispositif de commutation contient une temporisation d'activation, qui alimente les appareils consommateurs (4) en électricité seulement quand la force du vent a été au-dessus de la valeur de seuil de commutation sans interruption pendant une durée déterminée.

5. Station météo selon une des revendications 1 à 4, **caractérisée en ce que** le dispositif de commutation contient une temporisation de désactivation (14) qui sépare les appareils consommateurs (4) du réseau seulement quand la force du vent a été au-dessous de la valeur de seuil de commutation sans interruption pendant une durée déterminée.

6. Station météo selon la revendication 5, **caractérisée en ce que** le bouton ou l'interrupteur est une touche (16) actionnée manuellement, dans laquelle l'alimentation électrique se désactive à nouveau seulement après l'écoulement du cycle de marche résiduelle de la temporisation de désactivation (14).

7. Station météo selon les revendications 1 à 6, **caractérisée en ce que** des valeurs de mesure de la force du vent et la luminosité peuvent être mesurées simultanément et les valeurs de mesure avec des facteurs de pondération différents prévues comme valeur moyenne temporelle de la somme peuvent être comparées avec la valeur de seuil de commutation.

8. Station météo selon la revendication 7, **caractérisée en ce que** les facteurs de pondération de la force du vent et la luminosité sont dans le même rapport de grandeur les uns par rapport aux autres que les pourcentages correspondants de l'énergie éolienne et photovoltaïque dans le mélange d'énergie électrique de la région.

9. Station météo selon les revendications 1 à 8, **caractérisée en ce que** l'électronique de commutation est montée dans un boîtier central avec écran et éléments de commande et les capteurs de la force du vent et/ou de la luminosité ainsi que les unités d'interconnexion (15) de prises de courant de commutation (3a,3b) sont reliés via des liaisons radio sans fil avec l'électronique de commutation (2a).
